# EUROPÄISCHE PATENTANMELDUNG

(11) **EP 3 960 903 A1**
(43) Veröffentlichungstag der Anmeldung: **02.03.2022**
(21) Anmeldenummer: 20192385.1
(22) Anmeldetag: 24.08.2020
(51) Int. Cl.: C25B 9/05, C25B 9/70, C25B 15/08

(54) **VORRICHTUNG UND VERFAHREN ZUM BETRIEB EINER ELEKTROLYSE**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die Erfindung betrifft eine Vorrichtung und ein Verfahren zum Betrieb einer Elektrolyse mit ursprünglich Sauerstoff-haltiger Alkalihydroxid-Lösung als Elektrolyt-Vorstufe, worin jeweils Druck, Temperatur der Alkalihydroxid-Lösung und deren O₂-Gehalt eingestellt wird.

## Beschreibung

Die Erfindung betrifft eine Vorrichtung und ein Verfahren zum Betrieb einer Elektrolyse mit ursprünglich Sauerstoff-haltiger Alkalihydroxid-Lösung als Elektrolyt-Vorstufe, worin jeweils Druck, Temperatur der Alkalihydroxid-Lösung und deren O₂-Menge eingestellt wird.

Sauerstoffhaltige wässrige Alkalihydroxid-Lösung, nachfolgend auch Lauge genannt, wie z.B. Natronlauge oder Kalilauge, entstehen oder werden verwendet bei der Chlor-Alkali-Elektrolyse mit Sauerstoffverzehrkathode (SVK) oder der alkalischen Wasserelektrolyse. In diesem sauerstoffhaltigen wässrigen Alkalihydroxid-Lösungen liegt Sauerstoffgas gelöst oder solvatisiert vor.

Bei den Elektrolysen werden für Lauge kontaktierte Werkstoffe üblicherweise folgende leicht zu verarbeitende, chemisch beständige und preiswerte Werkstoffe wie thermoplastische Kunststoffe wie Polypropylen (im Folgenden auch als PP bezeichnet) (wie z.B. PP2222 oder PP2250), PVC, oder PTFE eingesetzt. Auch der Einsatz von C-PVC als Werkstoff ist möglich. Bevorzug wird als Werkstoff ein thermoplastischer Kunststoff

Ein weiterer Vorteil des Einsatzes von Kunststoffmaterialien in Vorrichtungen für die Elektrolyse ist deren elektrische Isolationswirkung. Metallische Werkstoffe wie z.B. Nickel, welches eingesetzt werden kann, ziehen einen hohen Aufwand an elektrischer Isolationsarbeit nach sich. Metallische Werkstoffe sind auch nicht unter jedem Potential korrosionssicher. Da bei Elektrolysen auch Streuströme und Potenzialverschleppungen auftreten können, ist den Kunststoff-basierten Werkstoffen daher der Vorzug zu geben.

In der Chlor-Alkali-Elektrolyse wird für Lauge-berührte Anlagenteile vorzugsweise Polypropylen eingesetzt.

Polypropylen ist gegen wässrige Lösungen von anorganischen Salzen sowie gegen fast alle anorganischen Säuren und Basen beständig, auch bei hoher Konzentration und bei Temperaturen über 60°C. Es gibt unterschiedliche PP-Typen wie z.B. hexagonal kristallines Polypropylen. So werden beispielsweise im industriellen Druck-Rohrleitungsbau verschiedene hochmolekulare Polypropylene, wie z. B. Homopolymere (PP-H, Typ 1) und statistische Copolymere (PP-R, Typ 3) eingesetzt. Blockcopolymere (PP-B, Typ 2) beschrieben. Hexagonal β-kristallines PP-H entsteht im Gegensatz zu normal monoklinem α-PP-H durch eine spezielle Nukleierung und optimale Verarbeitung. Dieses Material erfüllt alle Anforderungen internationaler Normen an PP-Homopolymere. Durchflussmedien von PP-Rohrleitungssystemen sind neben Wasser wässrige Lösungen, Säuren, Laugen und Lösungsmittel. Der Grad einer chemischen Resistenz des Polypropylens kann hierbei durch die Pigmentierung und durch Homogenität und Struktur der kristallinen Phase beeinflusst werden (Schöpf, A., Schneider, H.: Polypropylen für Rohrleitungssysteme, Kunststoffe, 87 (1997) 2, S. 198 - 201).

Ebenfalls muss berücksichtigt werden, dass bei Rohrleitungen und Behälterauskleidungen der thermoplastische Kunststoff, insbesondere das PP-Material, verarbeitet, d.h. üblicherweise geschweißt werden muss, wodurch Gefügeveränderungen und auch Einflüsse durch Additive im Schweißmaterial im Kunststoff entstehen können.

Es wurde beobachtet, dass während des Betriebes von Elektrolysevorrichtungen, die in einer Halbzellenreaktion gasförmigen Sauerstoff (O₂) nutzen oder freisetzen, die aus Kunststoff gefertigten Anlagenteile voranschreitenden Materialveränderungen unterliegen, wenn besagte Anlagenteile mit Lauge in Kontakt stehen. Diese Materialveränderungen führen oft zu Undichtigkeiten der Vorrichtung. Solche Phänomene zeigten sich insbesondere im Feedsystem des Elektrolyten nach längerer Betriebszeit von ca. einem Jahr an den verwendeten Kunststoffen wie PP und waren besonders ausgeprägt bei Temperaturen von über 40°C und einem Druck höher als Umgebungsdruck.

Es wurde festgestellt, dass diese Materialveränderungen ebenfalls an den Schweißnähten der verwendeten Kunststoffteile auftraten. Dies führte neben Außenleckagen auch zu einem Partikelabtrag, welcher zu Verstopfung im Feedsystem führte, wodurch Anlagenverfügbarkeit und die Sicherheit für den Betrieb einer technischen Anlage nicht mehr gegeben waren. Die Anlagenverfügbarkeit für technische Chlor-Anlagen sollte mehr als 2 Jahre, vorzugsweise mehr als 4 Jahre betragen.

Elektrolysevorrichtungen, die in einer Halbzellenreaktion Sauerstoffgas nutzen enthalten meist mindestens eine sogenannte Gasdiffusionselektrode, durch die Sauerstoff-haltiges Gas als Reaktand der Halbzelle zugeführt werden kann. Elektrolysevorrichtungen, die in einer Halbzellenreaktion Sauerstoffgas freisetzen werden beispielsweise für die Elektrolyse von Wasser, der sogenannten alkalischen Wasserelektrolyse, genutzt. In beiden Fällen wird an mindestens einer Elektrode durch den an dieser Elektrode stattfindenden elektrochemischen Vorgang gasförmiger Sauerstoff in den als Elektrolyt mit besagter Elektrode in Kontakt stehenden Elektrolyten eingetragen.

Es bestand somit die Aufgabe ein Elektrolyse-Verfahren sowie eine entsprechende Vorrichtung zur Verfügung zu stellen, worin jeweils die Langlebigkeit eines als Werkstoff der Elektrolysevorrichtung eingesetzten Kunststoffes der Lauge-kontaktierenden Vorrichtungsteile erhöht wird. Dabei soll nach wie vor die Wirtschaftlichkeit der Anlage bei Betrieb und Herstellung sowie eine leichte Verarbeitbarkeit des eingesetzten Kunststoffes gewahrt und ein effizienter Elektrolyseprozess gewährleistet sein.

Diese zuvor erwähnte Aufgabe wurde gelöst, in dem der Sauerstoffgehalt der in die Halbzelle als Elektrolyt einzuspeisenden wässrigen Alkalihydroxid-Lösung, sowie deren Druck im Feedsystem des Elektrolyseurs eingestellt wurde.

Ein erster Gegenstand der Erfindung ist daher ein Verfahren zum Betrieb einer Elektrolyse, worin an mindestens einer Elektrode durch den an dieser Elektrode stattfindenden elektrochemischen Vorgang gasförmiger Sauerstoff in den mit besagter Elektrode in Kontakt stehenden Elektrolyten eingetragen wird, dadurch gekennzeichnet, dass besagter Elektrolyt in die Elektrolysezelle eingebracht und wieder herausgeführt wird und der besagte in die Elektrolysezelle einzubringende Elektrolyt ein alkalischer, wässriger Elektrolyt ist, enthaltend Alkalihydroxid und bei einem absoluten Druck von 1 bar und einer Temperatur von 20°C eine Menge O₂ zwischen 0 und 25 mg/L, wobei vor der Einbringung in die Elektrolysezelle der absolute Druck des einzubringenden Elektrolyten im Bereich von 1,2 bar bis 3,5 bar liegt und die Temperatur des einzubringenden Elektrolyten größer als 40°C ist.

Zur Bestimmung der O₂-Menge wird eine Probe des zu bestimmenden Elektrolyten entnommen, in Stickstoff- oder Argonatmosphäre aufbewahrt und auf 20°C abgekühlt. Die O₂-Mengenbestimmung erfolgt danach wie nachfolgend beschrieben. Durch die Aufbewahrung unter Stickstoff oder Argon wird gewährleistet, dass kein O₂ entweichen oder aufgenommen werden kann. Eine Aufnahme wäre möglich durch den Kontakt mit Luft, da insbesondere beim Abkühlen der Probe die O₂-Löslichkeit steigt und O₂ aufgenommen werden könnte.

Die Menge O₂ des Elektrolyten kann bekanntermaßen mittels optischer Sauerstoffmessung durch Fluoreszenzlöschungs-Verfahren (beispielsweise durch den SE 740-Memosens^{®} Oxygen Sensor der Fa. Knick Elektronische Messgeräte GmbH & Co. KG) bestimmt werden. Ferner können auch andere Sensoren oder auch die Messung des Redoxpotenzials als Methoden zur Bestimmung der gelösten O₂ Menge eingesetzt werden. Alle im Rahmen der vorliegenden Anmeldung durchgeführten Bestimmungen der O₂ Mengen wurden mittels Fluoreszenzlöschungs-Verfahren vorgenommen. Die Messung erfolgte dabei, falls nicht anders beschrieben, an genommenen Proben bei einer Temperatur von 20°C und einem absoluten Druck von 1 bar.

Eine Elektrolysezelle enthält üblicherweise eine Kathodenhalbschale mit einer Kathode, einem Katholytzulauf, mindestens einem Katholytablauf, und weiter enthaltend eine Anodenhalbschale, wobei die Anodenhalbschale mindestens einen Anolytzulauf für die Einleitung eines Anolyten und einem Anolytablauf sowie einer Anode versehen ist, und einen zwischen Anodenhalbschale und Kathodenhalbschale angeordneten Separator zur Trennung von Anodenraum und Kathodenraum, weiter enthaltend elektrische Stromleitungen zur Verbindung von Anode und Kathode mit einer Gleichspannungsquelle.

Um mit Elektrolyseverfahren großtechnischen Mengen an Produkt herzustellen, sind großflächige Elektrolysezellen und Elektrolyseure mit einer großen Anzahl von Elektrolysezellen notwendig. Unter technischen Produktionsmengen sind hier und im weiteren Produktmengen mit mehr als 0,1 kg/(h^{∗}m²) je Elektrolysezelle zu verstehen. Hierzu werden üblicherweise, wie aus der Chlor-Alkali-Elektrolyse bekannt, Elektrolysezellen mit einer Elektrodenfläche von mehr als 2m² je Elektrolysezelle eingesetzt. Die Elektrolysezellen werden in Gruppen von bis zu 100 Stücken in einem Elektrolysegestell zusammengefasst. Mehrere Gestelle mit Elektrolysezellen bilden dann einen "Elektrolyseur". Die Kapazität eines industriellen Elektrolyseurs beträgt derzeit z.B. in der Chlorherstellung bis zu 30.000 t/a an Chlor und den jeweiligen Äquivalenten an Natronlauge und ggf. Wasserstoff.

Als in die Elektrolysezelle einzubringender Elektrolyt (auch "einzubringender Elektrolyt") wird der Elektrolyt definiert, der unmittelbar bevor er in die Elektrolysezelle eingebracht und in der Elektrolysezelle für den elektrochemischen Vorgang an der Elektrode genutzt wird. Der einzubringende Elektrolyt ist erfindungsgemäß ein alkalischer, wässriger Elektrolyt, enthaltend Alkalihydroxid und bei einem absoluten Druck von 1 bar und einer Temperatur von 20°C eine Menge O₂ von zwischen 0 und 25 mg/L.

Wird ein Parameterbereich definiert, der zwischen zwei Bereichsgrenzen liegt, so sind diese Bereichsgrenzen von dem Parameterbereich selbstredend nicht umfasst. Dementgegen sind die Bereichsgrenzen im Parameterbereich umfasst, wenn ein Parameterbereich als von einer Grenze bis zur anderen Grenze definiert ist.

Im Rahmen einer bevorzugten Ausführungsform ist ein Verfahren dadurch gekennzeichnet, dass der besagte Elektrolyt die Elektrolysezelle durchfließt und zu diesem Zweck Elektrolyt kontinuierlich in die Elektrolysezelle eingebracht und wieder herausgeführt wird. Hierbei wird kontinuierlich, das heißt gleichzeitig, einzubringender Elektrolyt in die Elektrolysezelle eingebracht und herausgeführter Elektrolyt wieder herausgeführt.

Der einzubringende Elektrolyt wird in dem erfindungsgemäßen Verfahren zur Einbringung in die Elektrolysezelle, bevorzugt zur kontinuierlichen Einbringung in die Elektrolysezelle, unter Druck gesetzt, beispielsweise mit Hilfe einer Pumpe, und weist vor Eintritt in die Elektrolysezelle einen absoluten Druck im Bereich von 1,2 bar bis 3,5 bar auf. Der Bereich einer für das Verfahren geeigneten Elektrolysevorrichtung, der für die Einspeisung des einzubringenden Elektrolyten genutzt wird, wird vom Fachmann als Einspeisungssystem oder "Feedsystem" bezeichnet.

Zum Feedsystem einer für das Verfahren geeigneten Elektrolysevorrichtung gehören der Lagerbehälter für den Elektrolyten, elektrolytführende Rohrleitungen sowie notwendige Regelventile und Absperrklappen, der Elektrolytverteiler, Pumpen, Filter, Wärmetauscher sowie diverse Messwerterfassungsgeräte wie Durchflussmessern oder Temperatur- und Drucksensoren. Das Feedsystem hat die Aufgabe, den einzuspeisenden Elektrolyten gleichmäßig auf alle Elektrolysezellen im Elektrolyseur homogen zu verteilen.

Durch die Rohrleitungen und Regelarmaturen, die im Feedsystem verbaut sind muss der (bevorzugt durch eine Pumpe erzeugte) Druck des einzubringenden Elektrolyten höher sein, als der Umgebungsdruck (Atmosphärendruck), d.h. mindestens 1,2 bar betragen, damit alle Elektrolysezellen mit ausreichender Menge an einzuspeisendem Elektrolyten versorgt werden können. Ein Druck wird wiederum bevorzugt nach der Entnahme des Elektrolyten aus dem Lagerbehälter aufgebaut und herrscht somit im Feedsystem zwischen dem Lagerbehälter nachgeschalteter Druckaufbau-Vorrichtung, bevorzugt Pumpe und Elektrolysezelle.

Die für das erfindungsgemäße Verfahren eingesetzte Menge an einzubringendem Elektrolyten beträgt je Elektrolysezelle bevorzugt zwischen 100 und 900 L/h. Bei einer Elektrolysevorrichtung mit beispielsweise 180 Elektrolysezellen, die parallel betrieben werden, ist bevorzugt ein Volumenstrom des einzubringenden Elektrolyten von 18 m³/h bis 162 m³/h über das Feedsystem zur Verteilung des einzubringenden Elektrolyten in die Elektrolysezellen bevorzugt. Hierbei beträgt der absolute Druck des einzubringenden Elektrolyten im Feedsystem bis zu 3,5 bar.

Ein bevorzugtes erfindungsgemäßes Verfahren kennzeichnet sich dadurch, dass der besagte einzubringende Elektrolyt an den Zuleitungen und/oder dem Einlass in die Elektrolysezelle mit mindestens einem thermoplastischem Kunststoffmaterial in Kontakt steht, bevorzugt ausgewählt aus Polypropylen (PP), Polyvinylchlorid (PVC) oder Polytetrafluorethylen (PTFE).

Mit Blick auf die Temperatur des einzubringenden Elektrolyten ist es erfindungsgemäß zwingend erforderlich, dass besagter einzubringender Elektrolyt eine Temperatur von mindestens 40°C, bevorzugt im Bereich von 60°C bis 85°C, aufweist.

Als aus der Elektrolysezelle herausgeführte Elektrolyt (auch "herausgeführter Elektrolyt") wird der Elektrolyt definiert, der nach Nutzung für den elektrochemischen Vorgang an der Elektrode unmittelbar aus der Elektrolysezelle austritt. Enthält die für die Durchführung des erfindungsgemäßen Verfahrens genutzte Elektrolysevorrichtung mehr als eine Elektrolysezelle in einem Elektrolyseur, dann kann der aus den einzelnen Elektrolysezellen herausgeführte Elektrolyt zunächst in einem Elektrolytsammler zusammengeführt und dann aus dem Elektrolyseur ausgebracht werden.

Im Rahmen einer Ausführungsform des Verfahrens weist der besagte einzubringende Elektrolyt eine geringere O₂ Menge auf als der herausgeführte Elektrolyt. In einer erfindungsgemäß bevorzugten Variante dieser Ausführungsform des Verfahrens weist der besagte herausgeführte Elektrolyt eine O₂ Menge von mindestens 25 mg/L, bevorzugt von mindestens 30 mg/L, ganz besonders bevorzugt von mindestens 35 mg/L auf.

Erfindungsgemäß bevorzugte Verfahren sind dadurch gekennzeichnet, dass besagte mindestens eine Elektrode durch den daran stattfindenden elektrochemischen Vorgang Sauerstoffgas verbraucht (Sauerstoffverzehrkathode) oder Sauerstoff entwickelt.

Falls gasförmiger Sauerstoff an der mindestens einen Elektrode verbraucht wird, wird in dem erfindungsgenmäßen Verfahren bevorzugt mindestens eine Sauerstoffverzehrkathode eingesetzt. Das erfindungsgemäße Verfahren kann in einer Ausführungsform als Natriumchlorid Elektrolyse unter Einsatz von mindestens einer Sauerstoffverzehrkathode (SVK) (kurz: NaCl-SVK Elektrolyse) betrieben werden. Das grundsätzliche Prinzip der NaCl-SVK Elektrolyse kann der Literatur entnommen werden: z.B. Moussalem et.al. J.Appl.Electrochem., 38(9), 1177-1194 (2008).

Die Prinzipien der Wasserelektrolyse beispielhaft Kapitel 6.3.4 in Volkmar M. Schmidt in "Elektrochemische Verfahrenstechnik" (2003 Wiley-VCH-Verlag; ISBN 3-527-29958-0) beschrieben und soll hier nicht weiter vertieft werden.

Bei der Ausführungsform als NaCl-SVK Elektrolyse ist der eingesetzte alkalische, wässrige Elektrolyt (Katholyt) beispielsweise eine Natronlauge. Dieser wird bevorzugt bei der Ausführungsform als NaCl-SVK Elektrolyse so geführt, dass dem Elektrolyseur als einzubringender Elektrolyt eine verdünnte Lauge, bevorzugt Natronlauge, mit einer Konzentration im Bereich von 28 bis 31 Gew.%, zugeführt und dem Elektrolyseur als herausgeführter Elektrolyt eine im Vergleich zum einzubringenden Elektrolyten höher konzentrierte Lauge mit einer Konzentration im Bereich von 28,5 bis 38 Gew.-% wieder entnommen wird.

Bei der Wasserelektrolyse ist der eingesetzte alkalische, wässrige Elektrolyt (Anolyt) beispielsweise eine wässrige Lösung von Kaliumhydroxid (Kalilauge). Dieser wird bevorzugt bei der Ausführungsform als alkalische Wasserelektrolyse so geführt, dass dem Elektrolyseur als einzubringender Elektrolyt eine verdünnte Lauge, bevorzugt Kalilauge, mit einer Konzentration im Bereich von 20 bis 28 Gew.%, zugeführt und dem Elektrolyseur als herausgeführter Elektrolyt eine im Vergleich zum einzubringenden Elektrolyten höher konzentrierte Lauge mit einer Konzentration im Bereich von 20,5 bis 33 Gew.-% wieder entnommen wird.

Die Temperatur des einzubringenden Elektrolyten beträgt für das erfindungsgemäße Verfahren bevorzugt zwischen 60 und 88°C und wird so von der Temperatur und dem Volumenstrom eingestellt, dass der herausgeführte Elektrolyt eine Temperatur von 85 bis 95°C aufweist.

Für eine möglichst niedrige Zellspannung wird dabei eine möglichst hohe Temperatur und möglichst niedrige Laugekonzentration des herausgeführten Elektrolyten angestrebt.

Bezüglich der Verwendung der Lauge wird jedoch eine möglichst hohe Konzentration benötigt, so dass jeder Betreiber hier sein eigenes Optimum bezüglich der angestrebten Anwendungen festlegt.

Da z.B. bei der NaCl-SVK Elektrolyse gasförmiger Sauerstoff als Reaktant der Kathode zugeführt wird, oder z.B. bei der Wasserelektrolyse Sauerstoffgas an der Anode generiert wird, und im Elektrolysebetrieb der gasförmige Sauerstoff mit dem alkalischen, wässrigen Elektrolyten, enthaltend Alkalihydroxid, in intensiven Kontakt kommt, weist der aus der Elektrolysezelle herausgeführte Elektrolyt, einen höheren Sauerstoff Gehalt als Menge O₂ von bis zu 40 mg/L auf. Während des Elektrolysebetriebes wird folglich gasförmiger Sauerstoff in den Elektrolyten eingetragen und absorbiert (insbesondere gelöst oder solvatisiert), und dabei die im Elektrolyten befindliche Menge O₂ erhöht.

Der dem Elektrolyseur entnommene herausgeführte Elektrolyt wird über einen Elektrolytsammler und weitere Rohrleitung ggf. mit Absperrklappen und Messeinrichtung für Durchfluss in einen Lagertank abgeführt. Ein Teil der Lauge wird insbesondere bei der NaCl-SVK Elektrolyse entnommen und dem Verkauf oder einem Verbraucher zugeführt, ggf. wird jeweils die Konzentration durch Eindampfung erhöht. Der verbleibende Rest wird bei der NaCl-SVK Elektrolyse mit Wasser verdünnt und der Elektrolyse über das Feedsystem zugeführt. Hierbei kann auch nur ein Teilstrom über einen Wärmetauscher geführt werden, so dass die für den Elektrolyseur benötigte Eingangstemperatur der Lauge erreicht wird.

Der Elektrolyt, der im Lagerbehälter während des Betriebes vorliegt, hat bevorzugt eine O₂-Menge von zwischen 0 und 25 mg O₂ / L Elektrolyt, gemessen bei einem absoluten Druck von 1 bar und einer Temperatur von 20°C. Der Elektrolyt aus dem Lagerbehälter wird nach Konzentrationseinstellung des Alkalihydroxids wieder den Elektrolysezellen über das Feedsystem zugeführt. Die Pumpe fördert den einzubringenden Elektrolyten mit einem absoluten Druck im Feedsystem von zwischen 1,2 und 3,5 bar bis zu den Elektrolysezellen. Der Druck lässt sich beispielsweise entsprechend einstellen, in dem die Rohrleitungen des Feedsystems im Querschnitt so dimensioniert werden, dass der absolute Druck im Feedystem den gewünschten Wert annimmt.

Der absolute Druck des einzubringenden Elektrolyten, insbesondere der Natronlauge, beträgt bevorzugt von 1,2 bis 3,5 bar, besonders bevorzugt von 1,2 bis 3,0 bar, weiter bevorzugt von 1,4 bis 3,0 bar, ganz besonders bevorzugt von 1,4 von 2,5 bar, betragen.

Es ist eine Ausführungsform des erfindungsgemäßen Verfahrens dadurch gekennzeichnet, dass Elektrolyt vor dessen Einbringung in die Elektrolysezelle einem Schritt der Reduktion der O₂ Menge unterworfen wird und dann als besagter einzubringender Elektrolyt in die Elektrolysezelle eingebracht wird. Der aus der mindestens einen Elektrolysezelle herausgeführte Elektrolyt wird dabei zunächst in den Lagertank überführt und die Reduktion der O₂ Menge aus dem Elektrolyten erst dann vorgenommen, bevor er aus dem Lagertank zur Wiederverwendung genutzt und als einzubringender Elektrolyt in die Elektrolysezelle eingebracht wird. Es ist jedoch eine erfindungsgemäß bevorzugte Ausführungsform des Verfahrens, dass herausgeführter Elektrolyt nach dessen Ausbringung zumindest einem Schritt der Reduktion der O₂ Menge unterworfen wird und danach zur Bereitstellung von in die Elektrolysezelle einzubringendem Elektrolyten wiederverwendet wird. Hierdurch können zusätzlich die Vorrichtungsteile der Rohrleitung und Lagerbehälter länger genutzt werden, sofern Kunststoffwerkstoffe für die Elektrolyt-berührten Rohrleitungen oder Lagerbehälter verwendet werden.

Der aus der mindestens einen Elektrolysezelle herausgeführte Elektrolyt wird wie zuvor beschrieben vorzugsweise einer Reduktion der O₂-Menge unterzogen. Dabei soll bevorzugt der Elektrolyt nach der Sauerstoffreduktion bei einem absoluten Druck von 1 bar und einer Temperatur von 20°C eine O₂-Menge von zwischen 0 und 25 mg / L aufweisen. Diese Sauerstoffreduktion erfolgt besonders bevorzugt bevor der herausgeführte Elektrolyt in den Lagertank übergeführt wird. Der Erfolg der Strippung kann über die Messung der O₂ Menge in dem aus dem Stripper abgeführten Elektrolyten überwacht werden.

Im Rahmen einer bevorzugten Ausführungsform wird der herausgeführte Elektrolyt vor dem Schritt der Reduktion der O₂ Menge mit zumindest Wasser zur Senkung der Alkalinität versetzt. Dabei ist es wiederum bevorzugt, wenn die Alkalihydroxid-Konzentration des herausgeführten Elektrolyten vor dem Schritt der Reduktion der O₂ Menge durch Zusatz von zumindest Wasser auf eine Konzentration im Bereich von 28 bis 31 Gew.% eingestellt wird.

Wird das erfindungsgemäße Verfahren im Rahmen einer NaCl-SVK-Elektrolyse durchgeführt, wird der auf Seite der Kathode der Elektrolysezelle herausgeführte Elektrolyt (herausgeführter Katholyt) einem Schritt der Reduktion der O₂ Menge unterworfen.

Für den Schritt der Sauerstoffreduktion können im Rahmen des erfindungsgemäßen Verfahrens zahlreiche Methoden zur Anwendung kommen. Beispielsweise kann die O₂ Menge reduziert werden, durch mindestens einen Schritt, ausgewählt aus
Strippung des herausgeführten Elektrolyten mit einem Inertgas, bevorzugt mit mindestens einem Inertgas, ausgewählt aus Stickstoff, Argon oder Gemischen daraus,
Anlegen eines Vakuums durch beispielsweise Injektion des ablaufenden Elektrolyten via Düse in einen Behälter, dessen absoluter Druck unter 1 bar steht
Anlegen von Ultraschall,
elektrochemische Reduktion des Sauerstoffs,
Zugabe mindestens eines Reduktionsmittels für Sauerstoff, wie z.B. Hydrazin.

Es ist erfindungsgemäß bevorzugt, für die Sauerstoffreduktion den herausgeführten Elektrolyten zumindest einer Strippung mit einem Inertgas als Strippgas, bevorzugt mit mindestens einem Inertgas, ausgewählt aus Stickstoff, Argon oder Gemischen daraus als Strippgas, zu unterziehen. Unter einer Strippung versteht der Fachmann im vorliegenden Fall eine durch Kontaktierung mit mindestens einem Strippgas zumindest teilweise bewirkte Desorption des im herausgeführten Elektrolyten gelösten Sauerstoffs (O₂), unter Senkung der O₂-Menge im Elektrolyten. Unter einem Inertgas versteht der Fachmann ein Gas, das unter seinen Anwendungsbedingungen im Rahmen des erfindungsgemäßen Verfahrens nahezu keine chemische Reaktion (das heißt nicht mehr chemischen Reaktionen verglichen mit Stickstoff als Vergleichsgas) eingeht und das von Sauerstoff verschieden ist.

Der bevorzugte Volumenstrom des Elektrolyten auf die für die Sauerstoffreduktion eingesetzte Strippvorrichtung beträgt dabei von 16 m³/h bis 160 m³/h.

Die eingesetzte Strippgasmenge je 750 L Elektrolyt beträgt bevorzugt zwischen 0,01 und 1 m³.

Die bevorzugte Temperatur des der Strippvorrichtung zugeführten Elektrolyten beträgt dabei 20 bis 85°C.

Als Strippgas wird bevorzugt Stickstoff eingesetzt.

Die bevorzugte Verweilzeit des Strippgases beträgt von 20 bis 120 Sekunden.

Der absolute Druck in der Strippvorrichtung beträgt während des Strippvorganges zwischen 0,6 bis 1,2 bar.

Die erfindungsgemäß für die Sauerstoffreduktion einsetzbare Stripp-Vorrichtung (im Folgenden auch als "Stripper" bezeichnet) kann bevorzugt aus mindestens einem Werkstoff, ausgewählt aus thermoplastischem Kunststoff (wie bevorzugt PP oder PP GFK), gummiertem Stahl oder Kombinationen daraus, konstruiert worden sein.

Der für die Sauerstoffreduktion einsetzbare Stripp-Vorrichtung weist mindestens einen Raum zur Strippung auf, in den sowohl der Elektrolyt, bevorzugt der herausgeführte Elektrolyt, und mindestens ein Strippgas eingebracht und miteinander kontaktiert, sowie gebrauchtes Strippgas und gestrippter Elektrolyt abgeführt werden können. Ein Strippraum, dessen Höhe größer ist, als dessen Breite und Länge wird auch als Strippkolonne bezeichnet. Eine Strippkolonne wird bevorzugt aus einem geschlossenen Leerrohr bereitgestellt, welches mindestens besagte Ein- uns Auslässe für den Elektrolyten, das Strippgas, das gebrauchte Strippgas und den gestrippten Elektrolyten enthält.

Der für den Verfahrensschritt der Sauerstoffreduktion eingesetzte Stripper weist in einer bevorzugten Ausführungsform des Verfahrens mindestens einen, bevorzugt zylinderförmigen Raum zur Strippung, mit einer Grundfläche von 0,3 m² bis 1,2 m². und eine Höhe von 1m bis 3m. auf, in den sowohl der Elektrolyt, bevorzugt der herausgeführte Elektrolyt, und mindestens ein Strippgas eingebracht und miteinander kontaktiert werden können.

In einer weiteren erfindungsgemäßen Ausführungsform des Strippers befinden sich am unteren Ende des Raumes zur Strippung der Einlass, insbesondere in Form von Düsen, einer Schlange oder eines Lochbodens, über den das Strippgas zugeführt wird.

Der Elektrolyt kann am oberen Ende des Raumes zur Strippung oder am unteren Ende des Raumes zur Strippung einen Einlass für den Elektrolyten aufweisen, wobei sich der Einlass für den Elektrolyten bevorzugt am oberen Ende des Raumes zur Strippung, insbesondere über den Düsen zur Zuführung des Strippgases, befindet.

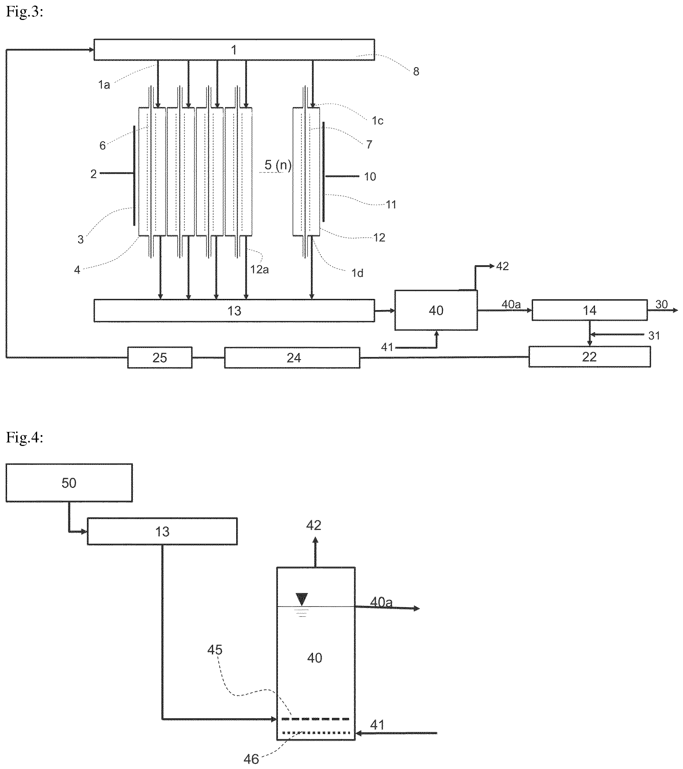

Ein Beispiel für einen Stripper in Form einer Strippkolonne mit Elektrolyteinlass und Strippgaseinlass, jeweils am unteren Ende des Raumes zur Strippung ist in Fig. 4 illustriert. In dieser Anordnung gemäß Fig.4 werden Strippgas und Elektrolyt im Gleichstrom durch die Strippkolonne geführt.

Der aus der mindestens einen Elektrolysezelle des Elektrolyseurs 50 herausgeführte Elektrolyt wird im Elektrolytsammler 13 vereint und von dort aus von unten einer Strippkolonne 40 zugeführt. Die Strippkolonne 40 umfasst ein Leerrohr mit einem Überlauf, aus dem die von unten zugeführte Lauge ablaufen kann. Die Strippkolonne ist während des Betriebes mit Elektrolyt zwischen dem Einlauf und dem Ablauf gefüllt. Das Strippgas 41 wird über ein Gasverteiler 46 z.B. in Form eines Rohrsystems in einer Schlangenform ausgeführt oder einen Lochboden oder über eine oder mehrere Düsenvon unten zugeführt und läuft im Gleichstrom mit der Lauge nach oben. Das Strippgas verlässt die Strippkolonne 40 oberhalb des Elektrolytablaufes 42 und kann einer Abluftbehandlung zugeführt werden. Als Strippgas 41 wird vorzugsweise Stickstoff eingesetzt. Die an O₂ abgereicherte Lauge 40a wird z.B. einem Lagerbehälter oder wieder dem Elektrolyseur 50 zugeführt.

Ganz besonders bevorzugt werden Strippgas und Elektrolyt im Stripper im Gegenstrom geführt. Dabei erweist es sich wiederum als bevorzugt, wenn sich der Einlass für den Elektrolyten bevorzugt am oberen Ende des Raumes zur Strippung, insbesondere über den Düsen zur Zuführung des Strippgases, befindet und sich der Auslass des gestrippten Elektrolyten am unteren Ende des Raumes zur Strippung und der Auslass des aus dem Strippgas nach der Strippung gebildeten Gases am oberen Ende des Raumes zur Strippung befindet.

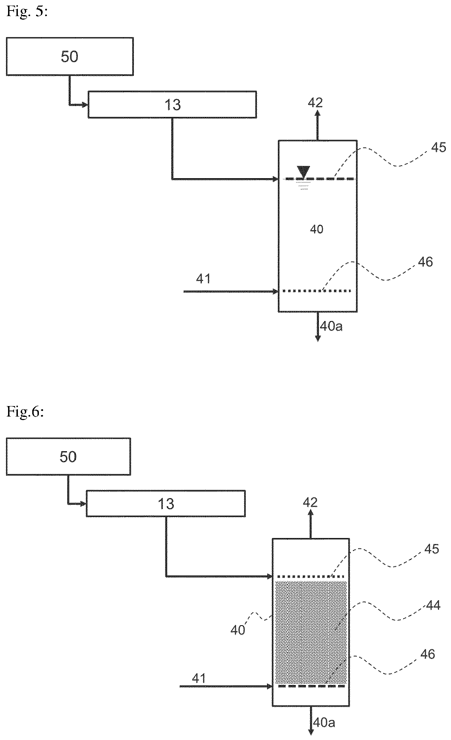

Eine bevorzugte Ausführungsform einer im erfindungsgemäßen Verfahren einsetzbaren Stripp-Vorrichtung in Form einer Strippkolonne im Gegenstrom wird in Fig. 5 offenbart. In dieser Anordnung werden Strippgas und Elektrolyt im Gegenstrom durch die Strippkolonne geführt.

Der aus der mindestens einen Elektrolysezelle 5 des Elektrolyseurs 50 herausgeführte Elektrolyt wird im Elektrolytsammler 13 vereint und von dort aus von oben einer Strippkolonne 40 zugeführt. Die Strippkolonne 40 umfasst ein Leerrohr mit einem Elektrolyt-Ablauf am Boden, aus dem der von oben zugeführte Elektrolyt nach der Strippung ablaufen kann. Die Strippkolonne 40 ist während des Betriebes zwischen dem Elektrolyt-Einlauf, der z.B. über eine Flüssigkeitverteiler 45 erfolgen kann und dem Elektrolyt-Auslauf, aus dem die O₂ arme Lauge 40a herausgeführt wird, mit Elektrolyt gefüllt. Das Strippgas 41 wird über einen Gasverteiler 46 z.B. ein Rohrsystem bestehend aus z.B. Düsen, eine Schlange oder einen Lochboden von unten der Kolonne zugeführt und läuft im Gegenstrom zum Elektrolyten nach oben. Das genutzte Strippgas 42 verlässt die Strippkolonne oberhalb des Elektrolytzulaufes und kann einer Abluftbehandlung zugeführt werden. Als Strippgas wird vorzugsweise Stickstoff eingesetzt.

Generell können im Strippraum des Strippers zur Erhöhung der Effektivität der Strippung Füllkörper enthalten sein, wie in Fig. 6 dargestellt. Neben Füllkörpern können auch strukturierte Packungen, wie sie aus der Destillationstechnik bekannt sind, eingesetzt werden. Der Stripper wird in einer bevorzugten Ausführungsform im Raum der Strippung mit mindestens einem Füllkörper ausgerüstet, ausgewählt aus kugelförmiger Füllkörper mit Netzstrukturen oder anderen Aussparungen und Geometrien, zylindrische Ringe wie z.B. Raschig-Ringen, Hohlzylinder, halbierte Hohlkörper oder weiteren üblichen Ausführungsformen.

Die Füllkörper können aus verschiedenen Materialien hergestellt werden, z. B. Nickel, vernickeltem, rostfreiem Stahl, Kunststoff oder aus Keramik.

Eine bevorzugte Ausführungsform einer im erfindungsgemäßen Verfahren einsetzbaren Stripp-Vorrichtung gemäß Fig.5 in Form einer mit einem Füllkörper ausgerüsteten Strippkolonne wird in Fig 6 offenbart.

Der aus der mindestens einen Elektrolysezelle 5 des Elektrolyseurs 50 herausgeführte Elektrolyt wird im Elektrolytsammler 13 vereint und von dort aus von oben einer Strippkolonne 40 zugeführt. Die Strippkolonne umfasst ein Leerrohr, welches mit Füllkörpern 44, z.B. Raschig-Ringen oder Packungen, wie sie aus der Destillationstechnik bekannt sind, gefüllt ist. Die Strippkolonne ist mit einem Ablauf am Boden, aus dem der von oben zugeführte Elektrolyt nach der Strippung ablaufen kann ausgerüstet. Der zugeführte Elektrolyt kann über einen Flüssigkeitsverteiler 45 auf die Füllkörper aufgegeben werden. Die Strippkolonne ist während des Betriebes zwischen dem Einlauf und dem Auslauf nicht vollständig mit Elektrolyt gefüllt. Das Strippgas 41 von unten zugeführt, dies kann vorzugsweise auch über ein Gasverteiler 46 wie z.B. ein Rohrsystem z.B. in Form einer Rohleitungsschlange ausgeführt oder eine Lochboden von unten erfolgen und läuft im Gegenstrom zum Elektrolyten nach oben. Das genutzte Strippgas 42 verlässt die Strippkolonne oberhalb des Elektrolytzulaufes. Der gestrippte Elektrolyt 40a verlässt die Kolonne unterhalb des Strippgaszugangs. Als Strippgas 41 wird vorzugsweise Stickstoff eingesetzt.

Wird das erfindungsgemäße Verfahren im Rahmen einer NaCl-SVK-Elektrolyse durchgeführt, wird der auf Seite der Kathode der Elektrolysezelle herausgeführte Elektrolyt (herausgeführter Katholyt) einer Strippung, insbesondere unter Einsatz mindestens einer Strippkolonne (inbesondere gemäß einer Strippkolonne gemäß einer der Fig. 4, 5 oder 6) unterworfen. Dabei wäre in Fig. 4, 5 bzw. 6 der Elektrolytsammler als Katholytsammler zu bezeichnen.

Die Durchführung des erfindungsgemäßen Verfahrens kann mit Hilfe einer geeigneten Vorrichtung durchgeführt werden. Ein Weiterer Gegenstand der Erfindung ist daher eine Elektrolysevorrichtung, enthaltend
(a) mindestens einen Elektrolyseur, enthaltend
   - mindestens eine Elektrolysezelle, die mindestens eine Elektrode enthält, die für einen elektrochemischen Vorgang geeignet ist, bei dem Sauerstoffgas in den mit besagter Elektrode in Kontakt stehenden Elektrolyten des Elektrolyseurs eingetragen wird,
   - mindestens einen Einlass für die Einbringung von einzubringendem Elektrolyt mit Zuleitung zumindest in besagte mindestens eine Elektrolysezelle, wobei der einzubringende Elektrolyt eine Menge O₂ von zwischen 0 und 25 mg/L enthält und einen absoluten Druck von 1,2 bar bis 3,5 bar (abs.) und eine Temperatur von größer als 40°C aufweist,
   - mindestens eine Vorrichtung zur Druckerhöhung,
   - mindestens einen Auslass zur Herausführung von herausgeführtem Elektrolyt,
   und
(b) mindestens eine Vorrichtung zur Reduktion der O₂ Menge von wässrigen, alkalischen Flüssigkeiten zur Bereitstellung des einzubringenden Elektrolyten, die in Fluidverbindung mit dem mindestens einen Einlass für die Einbringung von einzubringendem Elektrolyt steht.

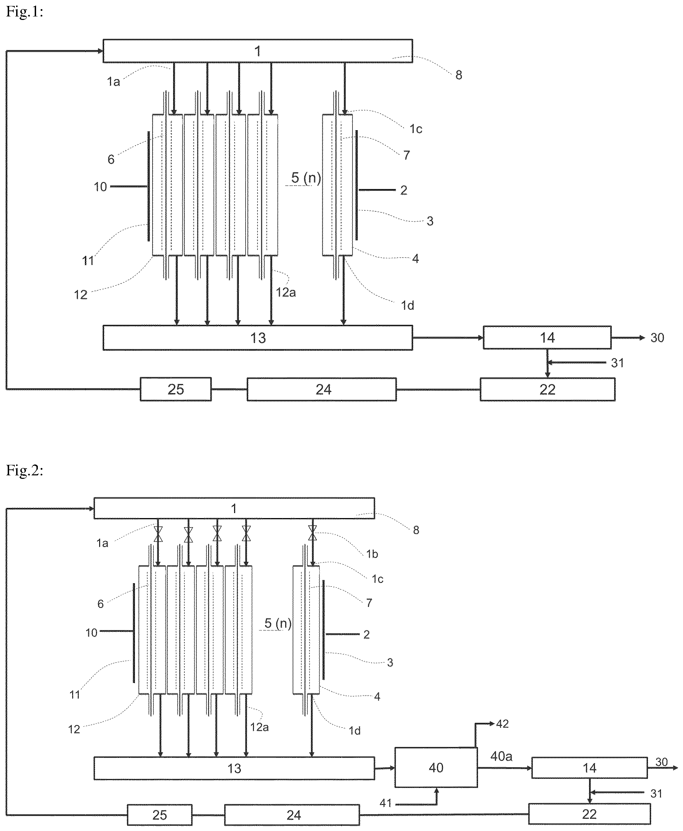

Dabei ist insbesondere ein Elektrolyseur vorzugsweise geeignet, wie er gemäß Fig.2 oder Fig.3 dargestellt ist.

Als Vorrichtung zur Druckerhöhung lässt sich beispielsweise eine Pumpe einsetzen.

Im Rahmen einer Ausführungsform umfasst die Elektrolysevorrichtung zusätzlich einen Lagerbehälter für Elektrolyten. Dabei kann vorzugsweise der Lagerbehälter mindestens einen Zufluss enthalten, der in Fluidverbindung mit der Vorrichtung zur Reduktion der O₂-Menge steht, wobei die Vorrichtung zur Reduktion der O₂-Menge in Fluidverbindung mit dem Auslass zur Herausführung von herausgeführtem Elektrolyt steht. Die Vorrichtung reduziert auf diese Weise den Sauerstoffgehalt des herausgeführten Elektrolyten vor Einbringung in den Vorratsbehälter.
Zudem kann der Vorratsbehälter mindestens einen Abfluss zur Ausbringung von Elektrolyt enthalten, der in Fluidverbindung mit der Vorrichtung zur Druckerhöhung steht, wobei letztgenannte wiederum in Fluidverbindung mit mindestens einem Einlass für die Einbringung von einzubringendem Elektrolyt mit Zuleitung zumindest in besagte mindestens eine Elektrolysezelle steht.

Zur Einstellung der Temperatur der einzuführenden Elektrolyten enthält die Elektrolysevorrichtung bevorzugt einen Wärmetauscher, der sich wiederum besonders bevorzugt zwischen Einlass für die Einbringung von einzubringendem Elektrolyt und Vorrichtung zur Druckerhöhung (z.B. Pumpe) des aus dem Lagerbehälter entnommenen Elektrolyten befindet. Zwischen den Wärmetauscher und dem Einlass für die Einbringung von einzubringendem Elektrolyt kann sich wiederum ein Filter befinden, durch den der Elektrolyt vor der Einbringung geführt werden kann.

Ferner eignen sich die für Merkmale des erfindungsgemäßen Verfahrens geschilderten Ausführungsformen einzeln oder in Kombination (insbesondere für den einzubringenden Elektrolyten, herausgeführten Elektrolyten, die mindestens eine Elektrode) auch vorzugsweise für die Vorrichtung, sofern sie Merkmale der Vorrichtung sind. Hier seien beispielsweise genannt:
Eine bevorzugte Elektrolysevorrichtung ist dadurch gekennzeichnet, dass besagte mindestens eine Elektrode, insbesondere die Elektrode 7, eine Sauerstoffverzehrkathode ist. Im Rahmen dieser Ausführungsform ist es wiederum besonders bevorzugt, eine Elektrolysevorrichtung gemäß Fig.2 zu wählen.

Die erfindungsgemäße Elektrolysevorrichtung enthält vorzugsweise einzubringenden Elektrolyt, (insbesondere einzubringenden Elektrolyt 8), der ein alkalischer, wässriger Elektrolyt ist, enthaltend Alkalihydroxid und eine Menge O₂ von zwischen 0 und 25 mg/L.

### Bezeichnungen in den Figuren

- 1: Elektrolytverteiler
- 1a: Zulaufschlauch
- 1b: Ventil zur Einstellung der Laugemenge
- 1c: Einlass für 8 in das Elektrolyseelement
- 1d: Auslass für 9 aus dem Elektrolyseelement
- 2: Minuspol
- 3: Endplatte Kathode
- 4: Kathodenhalbschale
- 5: Elektrolyseelement mit n als Anzahl der Elektrolyseelemente im Elektrolyseur
- 6: Separator von Anode und Kathode
- 7: Elektrode, die für einen elektrochemischen Vorgang geeignet ist, bei dem Sauerstoffgas in den mit besagter Elektrode in Kontakt stehenden Elektrolyten eingetragen wird
- 8: einzubringender Elektrolyt
- 9: herausgeführter Elektrolyt
- 10: Pluspol
- 11: Endplatte Anode
- 12: Anodenhalbschale
- 12a: Ablaufschlauch für herausgeführten Elektrolyt 13 Elektrolytsammler
- 14: Lagerbehälter
- 20: Lagerbehälter Lauge
- 21: Abgabe produzierte Lauge
- 22: Vorrichtung zur Druckerhöhung (z.B. Pumpe)
- 24: Wärmtauscher
- 25: Filter
- 30: Abgabe Lauge
- 31: Zugabe H2O zur Konzentrationseinstellung
- 40: Vorrichtung zur O₂ Reduktion, bevorzugt Strippkolonne
- 40a: Elektrolyt mit reduzierter O₂-Menge
- 41: Zuführung, bevorzugt für Strippgas
- 42: Auslass, insbesondere für Gas zur Abluftbehandlung
- 44: Füllkörper
- 45: Flüssigkeitsverteiler
- 46: Gasverteiler
- 50: Elektrolyseur

Fig.1 zeigt die Elektrolytzu- und -ableitung als Elektrolytkreislauf an einem Elektrolyseur
Fig.2 zeigt ein Beispiel einer erfindungsgemäßen Elektrolysevorrichtung mit Vorrichtung zur O₂ Reduktion im Elektrolyten, bevorzugt als Strippkolonne ausgeführt.
   Elektrolysevorrichtung, enthaltend
   (a) mindestens einen Elektrolyseur (50), enthaltend
      - mindestens eine Elektrolysezelle (5), die mindestens eine Elektrode (7) enthält, die für einen elektrochemischen Vorgang geeignet ist, bei dem Sauerstoffgas in den mit besagter Elektrode in Kontakt stehenden Elektrolyten des Elektrolyseurs (50) eingetragen wird,
      - mindestens einen Einlass (1c) für die Einbringung von einzubringendem Elektrolyt (8) mit Zuleitung zumindest in besagte mindestens eine Elektrolysezelle (5), wobei der einzubringende Elektrolyt (8) eine Menge O₂ von zwischen 0 und 25 mg/L enthält und einen absoluten Druck im Bereich von 1,2 bar bis 3,5 bar und einer Temperatur von größer als 40°C aufweist,
      - mindestens eine Vorrichtung zur Druckerhöhung (22), insbesondere eine Pumpe,
      - mindestens einen Auslass (1d) zur Herausführung von herausgeführtem Elektrolyt (9),
      und
   (b) mindestens eine Vorrichtung (40) zur Reduktion der O₂ Menge von wässrigen, alkalischen Flüssigkeiten zur Bereitstellung des einzubringenden Elektrolyten (8), die in Fluidverbindung mit dem mindestens einen Einlass (1c) für die Einbringung von einzubringendem Elektrolyt (8) steht.
Fig.3 zeigt ein Beispiel einer erfindungsgemäßen Elektrolysevorrichtung für eine Wasserelektrolyse, wobei die Elektrolysevorrichtung eine Vorrichtung zur O₂ Reduktion im Elektrolyten, bevorzugt als Strippkolonne ausgeführt, enthält.
Fig.4 zeigt die Einbindung einer Strippkolonne als Vorrichtung zur O₂ Reduktion 40 in die Elektrolysevorrichtung, wobei die Strippkolonne 40 derart ausgeführt ist, dass Strippgas 41 und Elektrolyt im Gleichstrom geführt werden.
Fig.5 zeigt die Einbindung einer Strippkolonne als Vorrichtung zur O₂ Reduktion 40 in die Elektrolysevorrichtung, wobei die Strippkolonne derart ausgeführt ist, dass Strippgas 41 und Elektrolyt im Gegenstrom geführt werden.
Fig.6 zeigt die Einbindung einer Strippkolonne als Vorrichtung zur O₂ Reduktion 40 in die Elektrolysevorrichtung, wobei die Strippkolonne derart ausgeführt ist, dass Strippgas 41 und Elektrolyt im Gegenstrom geführt werden und die Strippkolonne 40 mit Füllkörper 44 befüllt ist.

### Beispiele

### Beispiel 1 - Stand der Technik

Ein NaCl-SVK Elektrolyseur mit einer Fläche je Elektrolysezelle von 2,7 m², bei dem 158 Elemente in Reihe geschaltet waren, wurde je Kathodenhalbschale mit Natronlauge beschickt. Dabei wurde jeder Elektrolysezelle im Mittel ca. 250 L/h Natronlauge zugeführt, der Gesamtlauge-Volumenstrom zum Elektrolyseur betrug 39,5 m³/h. Der absolute Druck des Elektrolyten im Feedsystem betrug 4 bar, die Temperatur der Lauge 70°C. Die O₂-Menge des einzubringenden Elektrolyten im Feedsystem betrug 28 mg/L.

Die O₂ Menge des herausgeführten Elektrolytes hinter dem Elektrolyseur betrug, gemessen bei einer Temperatur von 20°C und einem absoluten Druck von 1 bar, 39 mg/L Natronlauge, gemessen mit der Messsonde SE 740-Memosens^{®} Oxygen Sensor der Fa. Knick Elektronische Messgeräte GmbH & Co. KG. Die Konzentration des herausgeführten Elektrolyts betrug im Auslauf des Elektrolyseurs 31,5 Gew.-%.

Nach einem Jahr Betrieb wurden bei einer routinemäßigen Inspektion erste Materialveränderungen an Schweißnähten des eingesetzten PP beobachtet. Nach 2 Jahren Betrieb wurden erste Leckagen an Schweißnähten und flächige Abträge des PP beobachtet, so dass erste Rohrleitungsstücke ausgetauscht und Behälterauskleidungen erneuert werden mussten.

Die Betriebszeit je Jahr betrug ca. 8600 h.

### Bespiel 2 - erfindungsgemäß

Der Elektrolyseur aus Beispiel 1 wurde analog beschickt, jedoch betrug die O₂ Menge des einzubringenden Elektrolyten im Feed 20 g/L. Der absolute Druck des Elektrolyten im Feedsystem betrug aufgrund der Vergrößerung der Rohrquerschnitte und des Einsatzes von Ventilen mit geringerem Druckverlust absolut 1,4 bar .

Der aus dem Elektrolyseur herausgeführte Elektrolyt wurde einem Stripper zugeführt. Dabei wurde der Stripper mit einem Volumenstrom von 113 m³/h von oben mit herausgeführtem Elektrolyt beschickt.

Ein Stripper bestand aus PP, das mit GFK verstärkt wurde. Der Stripper war ausgeführt als Leerrohr mit einem Durchmesser von 90 cm und einer Füllhöhe von 200 cm. Am Boden befand sich zum Einbringen des Strippgases Stickstoff ein Gasverteiler ausgeführt als Rohrleitungsschlange mit 170 Löcher, die jeweils einen 3mm Lochdurchmesser aufwies und einen Lochabstand von 5 cm aufweisen.

Es wurden 72 m³/h N₂ eingebracht. Die Verweilzeit des N₂ in der Füllhöhe betrug 63,6 s.

Nach 2 Jahren Betrieb konnten bei einer Inspektion keine Schäden an mit PP ausgerüsteten Bauteilen beobachtet werden.

## Patentansprüche

1. Verfahren zum Betrieb einer Elektrolyse, worin an mindestens einer Elektrode durch den an dieser Elektrode stattfindenden elektrochemischen Vorgang gasförmiger Sauerstoff in den mit besagter Elektrode in Kontakt stehenden Elektrolyten eingetragen wird, **dadurch gekennzeichnet, dass** besagter Elektrolyt in die Elektrolysezelle eingebracht und wieder herausgeführt wird und der besagte in die Elektrolysezelle einzubringende Elektrolyt ein alkalischer, wässriger Elektrolyt ist, enthaltend Alkalihydroxid und bei einem absoluten Druck von 1 bar und einer Temperatur von 20°C eine Menge O₂ zwischen 0 und 25 mg/L, wobei vor der Einbringung in die Elektrolysezelle der absolute Druck des einzubringenden Elektrolyten im Bereich von 1,2 bar bis 3,5 bar liegt und die Temperatur des einzubringenden Elektrolyten größer als 40°C ist.

2. Verfahren gemäß Anspruch 1, **dadurch gekennzeichnet, dass** der besagte einzubringende Elektrolyt eine geringere O₂ Menge aufweist als der herausgeführte Elektrolyt.

3. Verfahren gemäß Anspruch 1 oder 2, **dadurch gekennzeichnet, dass** der besagte herausgeführte Elektrolyt bei einem absoluten Druck von 1 bar und einer Temperatur von 20°C eine O₂ Menge von mindestens 25 mg/L, bevorzugt von mindestens 30 mg/L, ganz besonders bevorzugt von mindestens 35 mg/L, aufweist.

4. Verfahren nach einem der vorangehenden Ansprüche, **dadurch gekennzeichnet, dass** besagter einzubringender Elektrolyt eine Temperatur im Bereich von 60 bis 85°C aufweist.

5. Verfahren nach einem der vorangehenden Ansprüche, **dadurch gekennzeichnet, dass** der besagte Elektrolyt die Elektrolysezelle durchfließt und zu diesem Zweck Elektrolyt kontinuierlich in die Elektrolysezelle eingebracht und wieder herausgeführt wird.

6. Verfahren nach einem der vorangehenden Ansprüche, **dadurch gekennzeichnet, dass** besagte mindestens eine Elektrode durch den daran stattfindenden elektrochemischen Vorgang Sauerstoffgas verbraucht oder Sauerstoff entwickelt.

7. Verfahren nach einem der vorangehenden Ansprüche, **dadurch gekennzeichnet, dass** der besagte einzubringende Elektrolyt an den Zuleitungen und/oder dem Einlass in die Elektrolysezelle mit mindestens einem thermoplastischem Kunststoffmaterial in Kontakt steht, bevorzugt ausgewählt aus Polypropylen (PP) oder Polyvinylchlorid (PVC) oder Polytetrafluorethylen (PTFE).

8. Verfahren nach einem der vorangehenden Ansprüche, **dadurch gekennzeichnet, dass** Elektrolyt vor dessen Einbringung in die Elektrolysezelle einem Schritt der Reduktion der O₂ Menge unterworfen wird und dann als besagter einzubringender Elektrolyt in die Elektrolysezelle eingebracht wird.

9. Verfahren nach einem der Ansprüche 1 bis 8, **dadurch gekennzeichnet, dass** herausgeführter Elektrolyt nach dessen Ausbringung zumindest einem Schritt der Reduktion der O₂ Menge unterworfen wird und danach zur Bereitstellung von in die Elektrolysezelle einzubringendem Elektrolyten wiederverwendet wird.

10. Verfahren nach Anspruch 9, **dadurch gekennzeichnet, dass** herausgeführter Elektrolyt vor dem Schritt der Reduktion der O₂ Menge mit zumindest Wasser zur Senkung der Alkalinität versetzt wird.

11. Verfahren nach einem der Ansprüche 8 bis 10, **dadurch gekennzeichnet, dass** zur Reduktion der O₂ Menge ein Inertgas, insbesondere ausgewählt aus Stickstoff, Argon, oder Mischungen daraus, eingesetzt wird.

12. Elektrolysevorrichtung, enthaltend
(a) mindestens einen Elektrolyseur (50), enthaltend
• mindestens eine Elektrolysezelle (5), die mindestens eine Elektrode (7) enthält, die für einen elektrochemischen Vorgang geeignet ist, bei dem Sauerstoffgas in den mit besagter Elektrode in Kontakt stehenden Elektrolyten des Elektrolyseurs (50) eingetragen wird,
• mindestens einen Einlass (1c) für die Einbringung von einzubringendem Elektrolyt (8) mit Zuleitung zumindest in besagte mindestens eine Elektrolysezelle (5), wobei der einzubringende Elektrolyt eine Menge O₂ von zwischen 0 und 25 mg/L enthält, und einen absoluten Druck im Bereich von 1,2 bar bis 3,5 bar und eine Temperatur von größer als 40°C aufweist,
• mindestens eine Vorrichtung zur Druckerhöhung (22), insbesondere eine Pumpe,
• mindestens einen Auslass (1d) zur Herausführung von herausgeführtem Elektrolyt (9),
und
(b) mindestens eine Vorrichtung (40) zur Reduktion der O₂ Menge von wässrigen, alkalischen Flüssigkeiten zur Bereitstellung des einzubringenden Elektrolyten (8), die in Fluidverbindung mit dem mindestens einen Einlass (1c) für die Einbringung von einzubringendem Elektrolyt (8) steht.

13. Elektrolysevorrichtung gemäß Anspruch 12, **dadurch gekennzeichnet, dass** besagte Elektrode (7) eine Sauerstoffverzehrkathode ist.

14. Elektrolysevorrichtung gemäß Anspruch 12 oder 13, **dadurch gekennzeichnet, dass** sie einzubringenden Elektrolyten (8) enthält, der ein alkalischer, wässriger Elektrolyt ist, enthaltend Alkalihydroxid und eine Menge O₂ von zwischen 0 und 25 mg/L.

15. Elektrolysevorrichtung gemäß einem der Ansprüche 12 bis 14, **dadurch gekennzeichnet, dass** sie zusätzlich einen Lagerbehälter (14) für Elektrolyten enthält, der mindestens einen Zufluss aufweist, der in Fluidverbindung mit der Vorrichtung (40) zur Reduktion der O₂-Menge steht, wobei die Vorrichtung zur Reduktion der O₂-Menge (40) in Fluidverbindung mit dem Auslass zur Herausführung von herausgeführtem Elektolyt (1d) steht.
